# EUROPEAN PATENT APPLICATION

(11) **EP 4 113 403 A1**
(43) Date of publication of application: **04.01.2023**
(21) Application number: 20922111.8
(22) Date of filing: 26.02.2020
(51) Int. Cl.: G06Q 10/06

(54) **ASSISTANCE INFORMATION GENERATION DEVICE, ASSISTANCE INFORMATION GENERATION METHOD, AND PROGRAM RECORDING MEDIUM**

(71) Applicant: NEC Corporation, 108-8001 Tokyo (JP)
(72) Inventor: ISHIKAWA, Hajime, Tokyo 108-8001 (JP); SUGIMOTO, Takeo, Tokyo 108-8001 (JP)
(74) Representative: Betten & Resch
(86) International application number: PCT/JP2020/007569
(87) International publication number: WO 2021/171388

(57) **Abstract**

This assistance information generation device is provided with: a learning unit that generates at least one prediction model through machine learning using project information about past projects in order to generate assistance information for providing assistance in confirming validity and performing verification of development of a product, a service, a system, and the like by using project information about a target project; and a prediction unit that predicts at least one assistance data item by inputting the project information about the target project to the prediction model.

## Description

### [Technical Field]

The present invention relates to an assistance information generation device or the like that generates information for assisting verification and validation.

### [Background Art]

In a development of a product, a service, a system, or the like, quality evaluation is performed from the viewpoint of verification and validation as to whether each process such as analysis, design, development, and manufacturing is correctly performed and output is correctly created.

In general verification and validation (V&V), in each of a plurality of processes included in a development phase, it is verified whether requirements such as specifications, designs, and plans to be developed are satisfied. Then, in each process, validation is performed as to whether the function or performance to be developed is suitable for the intended use or purpose, or whether there is practical effectiveness. In the independent verification and validation (IV&V), development of products, services, systems, and the like, and the independent verification and validation are performed in an independent system in terms of technology, organization, and fund.

NPL 1 describes a basic concept regarding software development, and verification and validation in general software development.

PTL 1 discloses a method for predicting a failure that may occur in software. In the method of PTL 1, the update of the filter parameter is repeated in such a way that the evaluation value of the prediction model changes in an appropriate direction. Then, in the method of PTL 1, an explanatory variable is generated by applying power conversion to a value of software metrics based on a filter parameter when an evaluation value does not change in an appropriate direction, and binary discrimination or a numerical value is predicted using the explanatory variable and a prediction model.

### [Citation List]

### [Patent Literature]

[PTL 1] JP 2013-065084 A

### [Non Patent Literature]

[NPL 1] "IV&V Guidebook Introduced Version Ver. 2.1", published by Japan Aerospace Exploration Agency, June 2018, ISSN 2433-2232 (Online), JAXA-SP-18-001.

### [Summary of Invention]

### [Technical Problem]

In general verification and validation, an experienced expert selects work items to be verified, analysis viewpoints, and the like. Therefore, it is necessary to secure an expert having a skill to understand information about target development for a considerable period of time. In general verification and validation, in order to avoid overlooking of failures, tendency analysis of failures that have occurred in the target project is performed, but in order to find hidden failures, consideration by an expert with sufficient skill has been required. That is, in general verification and validation, a reliable effect cannot be obtained unless there is an expert with sufficient skills. When information assisting verification and validation can be generated based on the experience of an expert with sufficient skills, even inexperienced personnel can reliably perform verification and validation.

According to the method of PTL 1, a failure that can occur in software can be presented to inexperienced personnel. However, in the method of PTL 1, since binary discrimination or a numerical value is predicted using an explanatory variable obtained by filtering metrics measured from an input source code, it is not possible to predict a failure using requirement information that is not quantified. In the method of PTL 1, a viewpoint required for verification and validation such as whether a function matching a customer request is achieved or whether the function is developed according to a predetermined procedure is not considered, and it is not sufficient to assist verification and validation operations.

An object of the present invention is to provide an assistance information generation device and the like capable of generating assistance information for assisting verification and validation in development of a product, a service, a system, and the like by using project information of a target project.

### [Solution to Problem]

An assistance information generation device according to an aspect of the present invention includes a learning unit that generates at least one prediction model by machine learning using project information of a past project, and a prediction unit that predicts at least one piece of assistance data by inputting project information of a target project to the prediction model.

In an assistance information generation method according to an aspect of the present invention, the method executed by a computer includes generating at least one prediction model by machine learning using project information of a past project, and predicting at least one piece of assistance data by inputting project information of a target project to the prediction model.

A program according to an aspect of the present invention causes a computer to execute a process of generating at least one prediction model by machine learning using project information of a past project, and a process of predicting at least one piece of assistance data by inputting project information of a target project to the prediction model.

### [Advantageous Effects of Invention]

According to the present invention, it is possible to provide an assistance information generation device or the like capable of generating assistance information for assisting verification and validation in development of a product, a service, a system, or the like by using project information of a target project.

### [Brief Description of Drawings]

Fig. 1 is a block diagram for explaining an example of a configuration of an assistance information generation device according to a first example embodiment.
Fig. 2 is a conceptual diagram illustrating an example in which a learning unit of the assistance information generation device according to the first example embodiment generates a prediction model.
Fig. 3 is a conceptual diagram illustrating an example in which a prediction unit of the assistance information generation device according to the first example embodiment generates assistance information using a prediction model.
Fig. 4 is a conceptual diagram illustrating another example in which a prediction unit of the assistance information generation device according to the first example embodiment generates assistance information using a prediction model.
Fig. 5 is a conceptual diagram for explaining a general software development process.
Fig. 6 is a conceptual diagram for describing an example of executing verification and validation (V&V) using a prediction model generated by a learning unit of the assistance information generation device according to the first example embodiment.
Fig. 7 is a conceptual diagram for describing an example of executing independent verification and validation (IV&V) using a prediction model generated by a learning unit of the assistance information generation device according to the first example embodiment.
Fig. 8 is a flowchart for explaining an example of an operation of a learning unit of the assistance information generation device according to the first example embodiment.
Fig. 9 is a flowchart for explaining an example of an operation of a prediction unit of the assistance information generation device according to the first example embodiment.
Fig. 10 is a block diagram for explaining an example of a configuration of an assistance information generation device according to a second example embodiment.
Fig. 11 is a flowchart for explaining an example of the operation of the assistance information generation device according to the second example embodiment.
Fig. 12 is a conceptual diagram illustrating an example in which an assistance information generation device according to the second example embodiment generates a prediction model in Application Example 1.
Fig. 13 is a conceptual diagram illustrating an example in which an assistance information generation device according to the second example embodiment generates assistance information in Application Example 1.
Fig. 14 is an example of a work item list generated by an assistance information generation device according to the second example embodiment in Application Example 1.
Fig. 15 is a conceptual diagram illustrating an example in which an assistance information generation device according to the second example embodiment generates a prediction model in Application Example 2.
Fig. 16 is a conceptual diagram illustrating an example in which an assistance information generation device according to the second example embodiment generates assistance information in Application Example 2.
Fig. 17 is an example of a check list generated by an assistance information generation device according to the second example embodiment in Application Example 2.
Fig. 18 is a conceptual diagram illustrating an example in which an assistance information generation device according to the second example embodiment generates a prediction model in Application Example 3.
Fig. 19 is a conceptual diagram illustrating an example in which an assistance information generation device according to the second example embodiment generates assistance information in Application Example 3.
Fig. 20 is an example of failure analysis metrics generated by the assistance information generation device according to the second example embodiment in Application Example 3.
Fig. 21 is a conceptual diagram illustrating an example in which an assistance information generation device according to the second example embodiment generates a first prediction model in Application Example 4.
Fig. 22 is a conceptual diagram illustrating an example in which an assistance information generation device according to the second example embodiment generates a second prediction model in Application Example 4.
Fig. 23 is a conceptual diagram illustrating an example of category classification by machine learning performed by the assistance information generation device according to the second example embodiment in Application Example 4.
Fig. 24 is a conceptual diagram illustrating an example in which an assistance information generation device according to the second example embodiment generates assistance information in Application Example 4.
Fig. 25 is a conceptual diagram illustrating an example in which an assistance information generation device according to the second example embodiment predicts a category in Application Example 4.
Fig. 26 is a block diagram for explaining an example of a configuration of an assistance information generation device according to a third example embodiment.

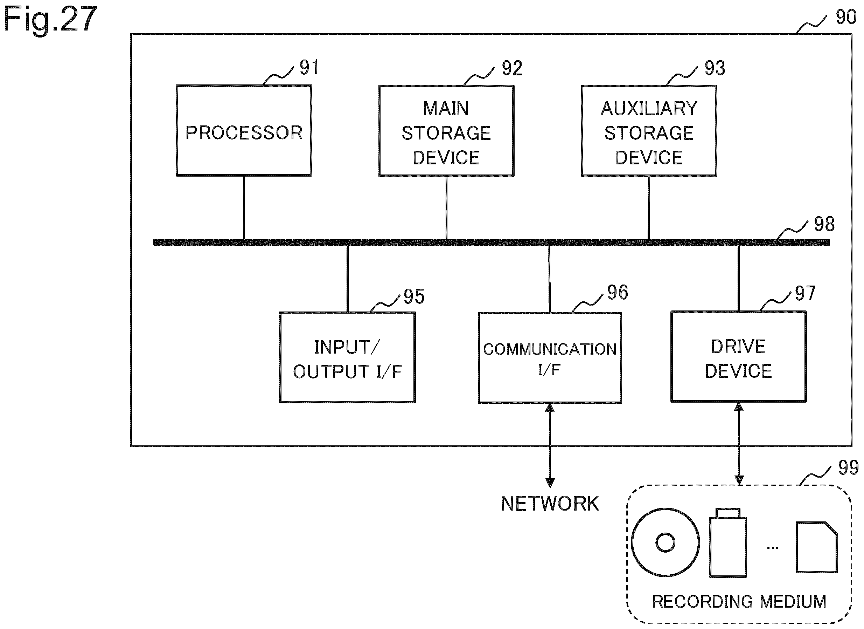

Fig. 27 is a block diagram illustrating an example of a hardware configuration that implements the assistance information generation device according to each example embodiment.

### [Example Embodiment]

Hereinafter, embodiments of the present invention will be described with reference to the drawings. However, the example embodiments described below have technically preferable limitations for carrying out the present invention, but the scope of the invention is not limited to the following. In all the drawings used in the following description of the example embodiment, the same reference numerals are given to the same parts unless there is a particular reason. In the following example embodiments, repeated description of similar configurations and operations may be omitted. The directions of the arrows in the drawings illustrate an example, and do not limit the directions of signals and the like between blocks.

### (First example embodiment)

First, an assistance information generation device according to a first example embodiment will be described with reference to the drawings. The assistance information generation device according to the present example embodiment generates, as assistance information, at least one item (also referred to as assistance data) used for "verification and validation" for ensuring quality in a plurality of processes included in development of products, services, systems, and the like.

In verification and validation (V&V), it is evaluated from two viewpoints of verification and validation that processes such as requirement definition, design, and production are correctly performed and that products of each process are correctly created. Verification and validation (V&V) executed under a system independent of an organization that develops software are called independent verification and validation (IV&V). Hereinafter, an example of generating assistance information applicable to a V-shaped model as a model of a software development process will be described. The assistance information generated by the assistance information generation device of the present example embodiment can be applied not only to the V-shaped model but also to models such as a waterfall model and a W-shaped model.

### (Configuration)

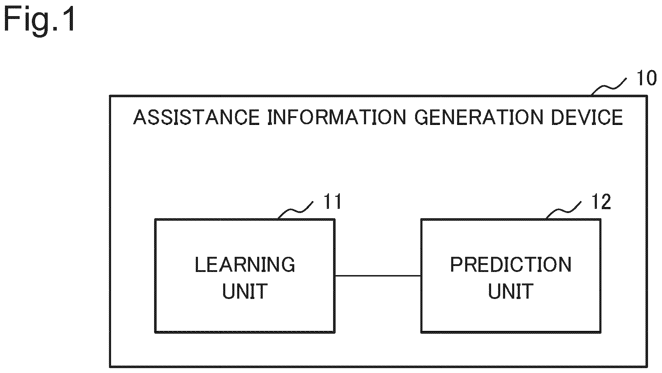

Fig. 1 is a block diagram illustrating an example of a configuration of an assistance information generation device 10 according to the present example embodiment. The assistance information generation device 10 includes a learning unit 11 and a prediction unit 12.

The learning unit 11 generates at least one prediction model by machine learning using project information of a past project. The prediction unit 12 inputs project information of the target project to the prediction model and predicts at least one piece of assistance data. For example, the prediction accuracy of the prediction model can be improved by using the project information of the past project related to the target project.

For example, the learning unit 11 executes machine learning using training data with project information of a past project as an explanatory variable and an item used in the past project as an objective variable. The project information includes at least one piece of data (also referred to as project data) related to a requirement of the project. The project data is related to individual requirements. For example, the project information includes natural language data. The project information may include numerical data. The item related to the objective variable of the training data may include the assistance data predicted by the assistance information generation device 10 using the project information of the past project.

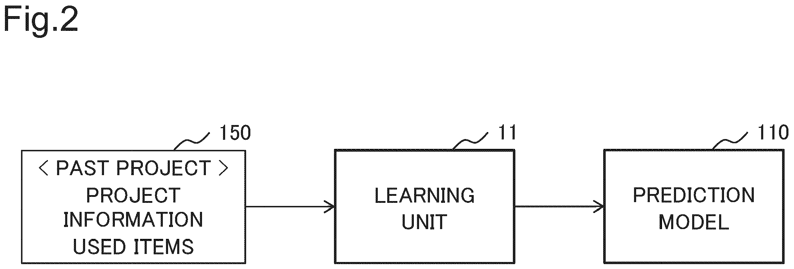

Fig. 2 is a conceptual diagram illustrating an example in which the learning unit 11 generates a prediction model 110. The training data with project information of the past project as an explanatory variable and the item used in the past project as an objective variable is input to the learning unit 11. The learning unit 11 executes machine learning using the input training data and generates the prediction model 110.

For example, items used in past projects include at least one requirement such as a work item, a review analysis viewpoint, and analysis metrics. For example, the items used in the past project include a work item used in the past project, a selected check item, failure analysis data actually used, a failure correction record, and the like. The items used in past projects are items selected by experienced experts in verification and validation of the past project.

The learning unit 11 may perform unsupervised learning using project information of the past project. For example, the learning unit 11 learns a model that classifies information based on project information including information about a failure that has occurred in a past project and information about a handling content for the occurred failure.

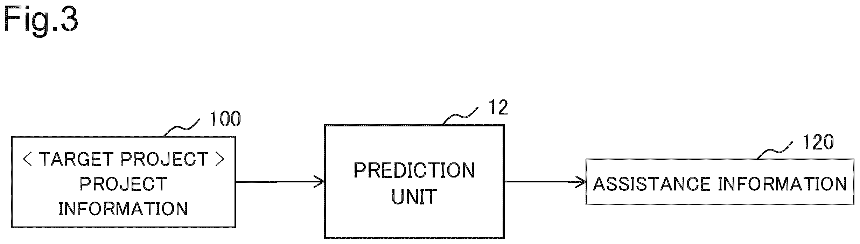

Fig. 3 is a conceptual diagram illustrating an example in which the prediction unit 12 outputs assistance information 120 using the prediction model 110. Project information 100 of the target project is input to the prediction unit 12. The prediction unit 12 inputs the project information 100 of the target project to the prediction model 110. At least one piece of assistance data based on the input project information 100 is output from the prediction model 110. The prediction unit 12 outputs at least one piece of assistance data output from the prediction model 110 as the assistance information 120.

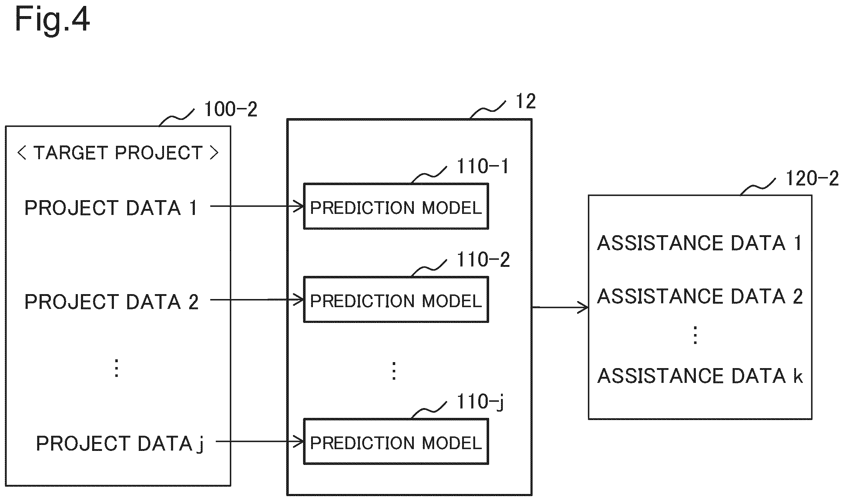

Fig. 4 is a conceptual diagram illustrating an example in which the prediction unit 12 inputs the plurality of pieces of project data 1 to j to the plurality of respective prediction models 110-1 to j to output the assistance information 120 including the plurality of pieces of assistance data 1 to k (j and k are integers of 1 or more). Each of the plurality of prediction models 110-1 to j is related to the plurality of respective pieces of project data 1 to j. The plurality of prediction models 110-1 to j is models generated by machine learning using the plurality of respective pieces of project data 1 to j. The plurality of prediction models 110-1 to j outputs assistance data related to the plurality of respective pieces of input project data 1 to j. For example, when project data is input to the plurality of respective prediction models 110-1 to j, there may be a prediction model 110 that does not output assistance data, there may be a prediction model 110 that outputs a plurality of pieces of assistance data, or duplicate assistance data may be output. Therefore, in the example of Fig. 4, the number of pieces of project data and the number of pieces of assistance data are different. When project data is input to the plurality of respective prediction models 110-1 to j and all the prediction models 110 output different pieces of assistance data one by one, the number of pieces of project data and the number of pieces of assistance data are the same.

The project information 100-2 including a plurality of pieces of project data 1 to j related to the target project is input to the prediction unit 12. The prediction unit 12 input the plurality of pieces of project data 1 to j to the plurality of respective prediction models 110-1 to j. At least one piece of assistance data related to the input project information is output from the plurality of respective prediction models 110-1 to j. Each of the plurality of prediction models 110-1 to j may be configured to output one piece of assistance data or may be configured to output a plurality of pieces of assistance data. Each of the plurality of prediction models 110-1 to j may not necessarily output the assistance data according to the values of respective pieces of the input project data 1 to j. In the example of Fig. 4, k pieces of assistance data (assistance data 1 to k) are output from the plurality of prediction models 110-1 to j. The prediction unit 12 outputs the assistance information 120-2 including a plurality of pieces of assistance data 1 to k output from the prediction model 110.

For example, the prediction unit 12 outputs the generated assistance information to an output device such as a display device (not illustrated) or a printing device (not illustrated). The participant participating in the target project browses the assistance information displayed on the display device and the assistance information printed on a paper medium or the like by the printing device, and can selectively verify and examine validity of work items, analysis viewpoints, and the like used by an experienced expert.

For example, the prediction unit 12 receives project information including project data such as order data, contract data, estimate data, participation data, and resource data of the target project. For example, the order data includes data related to a purpose of the target project, an orderer, and the like. For example, the contract data includes data related to a contract content such as defect guarantee of the target project. For example, the estimate data includes data related to estimation such as a scale and a development period of the target project. For example, the participation data includes data related to participants and participating departments, external participating companies, and the like of the target project. For example, the resource data includes data related to equipment and a license of software used in the target project.

For example, the prediction unit 12 receives project information including project data such as progress data and correction data of the target project. For example, the progress data includes data related to a progress, actual man-hours, a review record, a test record, and the like of the target project. For example, the correction data includes data related to a correction record of a failure occurred in the target project, quality accounting (registered trademark), and the like. Quality accounting is a mechanism for managing quality based on a relationship between a bug built in a program in each process and a bug extracted from the program in each process in software development.

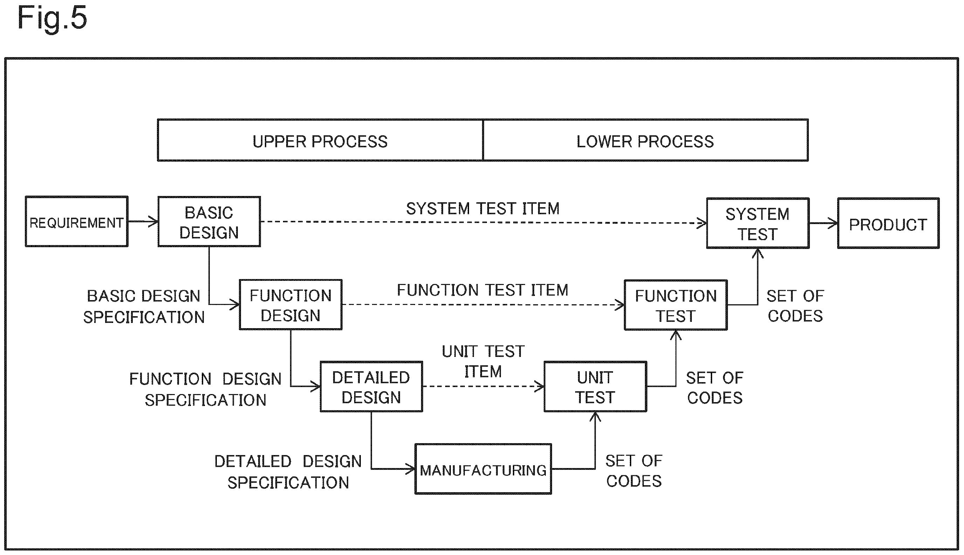

Fig. 5 is a conceptual diagram for explaining an example of a software development process. General software development is roughly divided into an upper process of creating quality and a lower process of verifying quality. The upper process includes a basic design process, a function design process, and a detailed design process. The lower process includes a unit test process, a function test process, and a system test process. Software development starts with the requirement definition, and the product (output) of the upper process serves as an input of the next process, and development proceeds.

In each process of the upper process, a review is prepared for each process. In each process of the upper process, a bug is extracted based on the review for each process, and a specification is created as a product in each process. The specification created in each process of the upper process is sent to the next process.

In the basic design process, basic design is performed based on project requirements, and a basic design review is created. In the basic design process, a bug is extracted based on the basic design review. When a bug is extracted, a basic design specification is created in the basic design process. The basic design specification is sent to the function design process. System test items are set from the basic design process to the system test process.

In the function design process, function design is performed based on the basic design specification, and function design review is created. In the function design process, a bug is extracted based on the function design review. When the bug is extracted, a function design specification is created in the function design process. The function design specifications are sent to the detailed design process. Function test items are set from the function design process to the function test process.

In the detailed design process, detailed design is performed based on the function design specification, and detailed design review is created. In the detailed design process, a bug is extracted based on the detailed design review. When the bug is extracted, a detailed design specification is created in the detailed design process. The detailed design specifications are sent to the manufacturing process. Unit test items are set from the detailed design process to the unit test process.

In the manufacturing process, codes for each program constituting the software to be developed of the target project are created based on the detailed design specification. A set of codes generated based on the detailed design specifications is sent to a unit test process.

In each process of the lower process, a test based on the test item set by the related process of the upper process is executed. Software whose quality is guaranteed is shipped as a product through each process of the lower process.

In the unit test process, a unit test for each program constituting the software is executed based on the unit test item. A set of software codes that was successful in the unit test is sent to the function test process. Software that had a problem in the unit test is redesigned to solve the problem found in the unit test.

In the function test process, a function test for verifying whether the modules and subsystems constituting the software cooperate with each other is executed based on the function test item. A set of software codes that was successful in the function test is sent to the system test process. The software having a problem in the function test is redesigned to solve the problem found in the function test.

In the system test process, a system test for verifying whether the system to be developed operates as expected is executed based on the system test item. A set of software codes that has been successful in the system testing is shipped as a product. The software having a problem in the system test is redesigned to solve the problem found in the system test.

For example, in quality accounting, when the number of bugs (liabilities) built in the program in each process and the number of bugs (repayment) extracted from the program in the process are balanced, the program is sent to the next process. For example, the program under development may be sent to the next process based on the relationship between the bug extraction target based on the prediction of liabilities in each process and the repayment extraction record in the process. In quality accounting, quality is created in the form of review in each process of the basic design process, the function design process, the detailed design process, and the manufacturing process, and the quality created in the upper process is validated in the lower process.

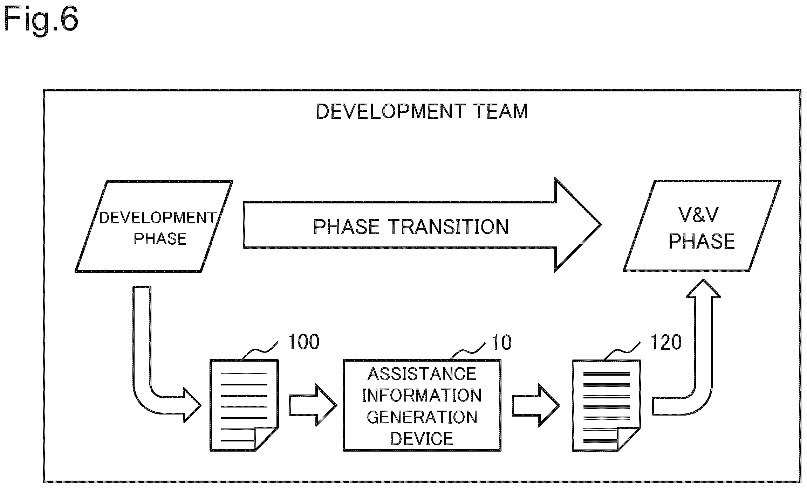

Fig. 6 is a conceptual diagram for describing a case where V&V is executed using the prediction model 110 generated by the learning unit 11 of the assistance information generation device 10. In the example of Fig. 6, a phase transition from a development phase to a V&V phase is performed for each process in a single development team. The project information 100 including a product created based on a requirement of the target project in the development phase is input to the assistance information generation device 10. The assistance information generation device 10 inputs the project information 100 to the prediction model, and generates the assistance information 120 including at least one piece of assistance data. The assistance information generation device 10 outputs the generated assistance information 120. The assistance information 120 output from the assistance information generation device 10 is sent to the V&V phase. In the V&V phase, verification and validation are executed based on the assistance information 120 generated by the assistance information generation device 10.

Verification and validation in V&V are performed for each process included in software development. In the verification, whether the intermediate product of each process is correctly made is checked in light of the input information from the preceding process. In the validation, it is checked whether the development product of each process is made as expected by the user. V&V is implemented from upstream process of software development. When the defect of the software can be removed in the upstream process, the risk, cost, and influence on the schedule in the software development can be reduced.

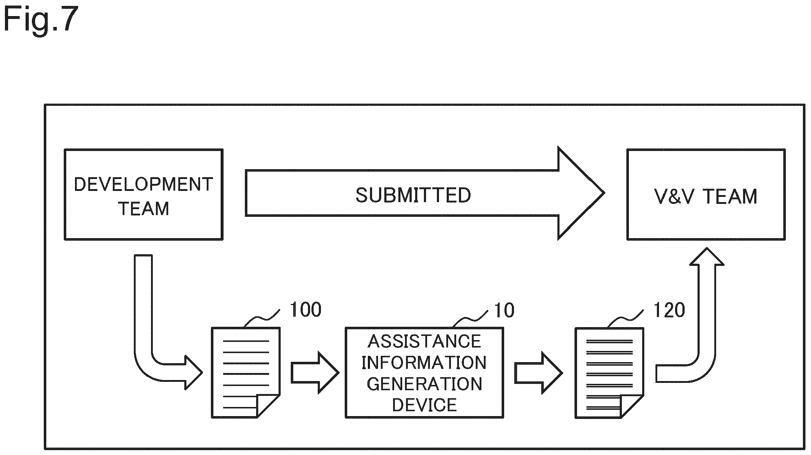

Fig. 7 is a conceptual diagram for describing a case where the IV&V is executed using the prediction model 110 generated by the learning unit 11 of the assistance information generation device 10. In the example of Fig. 7, the products created in each process by the development team are submitted to the V&V team independent of the development team. The project information 100 including a product created based on the requirement of the target project by the development team is input to the assistance information generation device 10. The assistance information generation device 10 inputs the project information 100 to the prediction model, and generates the assistance information 120 including at least one piece of assistance data. The assistance information generation device 10 outputs the generated assistance information 120. The assistance information 120 output from the assistance information generation device 10 is sent to the V&V team. The product submitted to the V&V team is verified and validated by the V&V team based on the assistance information 120 generated by the assistance information generation device 10.

### (Operation)

Next, an operation of the assistance information generation device 10 will be described with reference to the drawings. Hereinafter, the operation of the learning unit 11 and the operation of the prediction unit 12 will be individually described. In the following description, the learning unit 11 or the prediction unit 12 is regarded as the subject of the operation, but the assistance information generation device 10 can also be regarded as the subject of the operation.

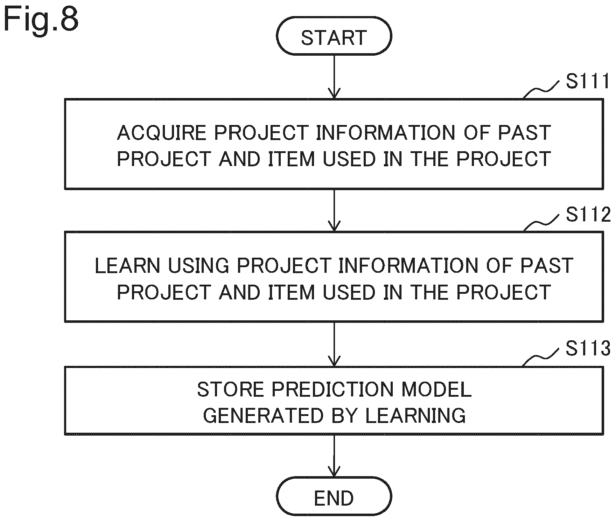

Fig. 8 is a flowchart for explaining the operation of the learning unit 11. Fig. 8 is an example of generating a prediction model by supervised machine learning. In the following description, a case where a prediction model is generated by unsupervised machine learning will also be described.

In Fig. 8, first, the learning unit 11 acquires project information of a past project and an item used in the past project (step Sill). In a case where unsupervised learning is executed, the learning unit 11 generates a prediction model by receiving a correction history of a failure as project information of a past project and classifying the received correction history into categories.

Next, the learning unit 11 executes machine learning using the project information of the past project and the item used in the past project (step S112). When the unsupervised learning is executed, the learning unit 11 generates the prediction model by classifying the received correction history into categories.

Next, the learning unit 11 stores the prediction model generated by the machine learning (step S113).

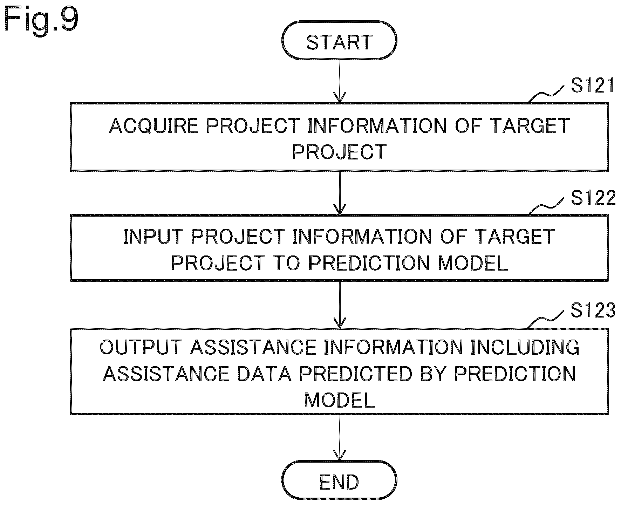

Fig. 9 is a flowchart for explaining the operation of the prediction unit 12. Fig. 9 is an example of predicting the assistance information including at least one piece of assistance data using a prediction model generated by machine learning.

In Fig. 9, first, the prediction unit 12 acquires project information of the target project (step S121).

Next, the prediction unit 12 inputs the project information of the target project to the prediction model (step S122).

Next, the prediction unit 12 outputs assistance information including at least one piece of assistance data predicted by the prediction model (step S123).

As described above, the assistance information generation device according to the present example embodiment includes the learning unit and the prediction unit. The learning unit generates at least one prediction model by machine learning using project information of a past project. The prediction unit inputs project information of the target project to the prediction model and predicts at least one piece of assistance data.

For example, the learning unit generates at least one prediction model by machine learning using training data with project information of a past project as an explanatory variable and an item used in the past project as an objective variable.

For example, the project information of the past project and the target project includes requirement information of the past project and the target project, respectively. For example, the requirement information of the past project and the target project includes at least one of order data, contract data, estimate data, participation data, and resource data of the past project and the target project, respectively.

The assistance information generation device of the present example embodiment predicts assistance data by inputting project information of a target project to a prediction model generated by machine learning using project information of a past project. Therefore, therefore, according to the assistance information generation device of the present example embodiment, the assistance information for assisting verification and validation in the development of products, services, systems, and the like can be generated using the project information of the target project.

### (Second example embodiment)

Next, an assistance information generation device according to a second example embodiment will be described with reference to the drawings. The assistance information generation device according to the present example embodiment generates assistance information for assisting verification and validation in development of a product, a service, a system, or the like, using at least one piece of assistance data predicted using a prediction model.

### (Configuration)

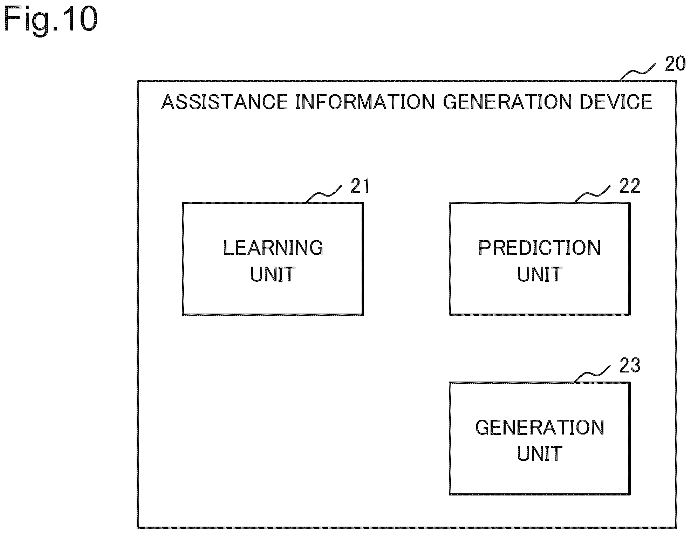

Fig. 10 is a block diagram illustrating an example of a configuration of an assistance information generation device 20 according to the present example embodiment. The assistance information generation device 20 includes a learning unit 21, a prediction unit 22, and a generation unit 23. The learning unit 21 and the prediction unit 22 have the same configurations as the learning unit 11 and the prediction unit 12 of the assistance information generation device 10 according to the first example embodiment. Hereinafter, description of the learning unit 11 and the prediction unit 12 will be omitted, and description will be given focusing on the generation unit 23.

The generation unit 23 acquires at least one piece of assistance data predicted by the prediction unit 22. The generation unit 23 generates the assistance information using at least one piece of assistance data predicted by the prediction unit 22. The generation unit 23 outputs the generated assistance information. A specific example of the assistance information generated by the generation unit 23 will be described later.

### (Operation)

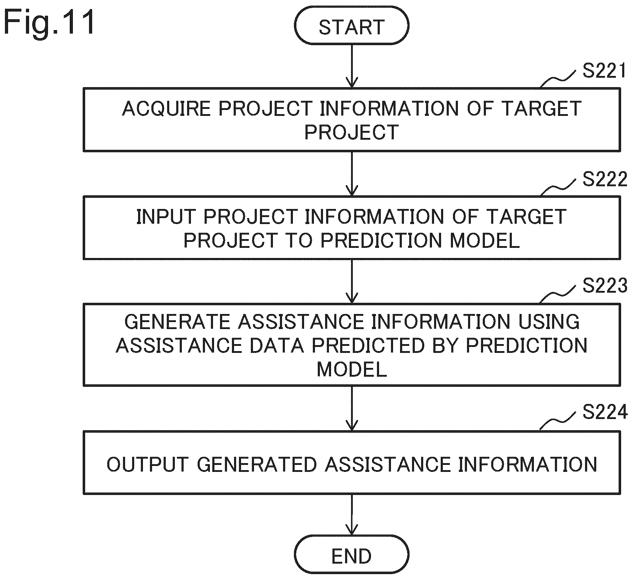

Next, an operation of the assistance information generation device 20 will be described with reference to the drawings. The machine learning by the learning unit 21 is similar to the processing (Fig. 8) of the learning unit 11 of the assistance information generation device 10 according to the first example embodiment, and thus description thereof is omitted. Fig. 11 is a flowchart for explaining operations of the prediction unit 22 and the generation unit 23 of the assistance information generation device 20.

In Fig. 11, first, the prediction unit 22 acquires project information of the target project (step S221).

Next, the prediction unit 22 inputs the project information of the target project to the prediction model (step S222).

Next, the generation unit 23 generates the assistance information using at least one piece of assistance data predicted by the prediction model (step S223).

Then, the generation unit 23 outputs the generated assistance information (step S224).

Here, the application example of the assistance information generation device 20 will be described with an example. The following example is an example in which the assistance information generation device 20 is applied to the IV&V. The following example is an example, and does not limit the assistance information generated by the assistance information generation device 20 when the assistance information generation device 20 is applied to the IV&V.

### [Application Example 1]

First, an example (Application Example 1) in which the assistance information generation device 20 generates assistance information including a work item to be performed in a target project as assistance data based on requirement information in a past project will be described. In Application Example 1, at the start of an IV&V activity, a work item list is generated as assistance information for assisting selection of IV&V work items. Application Example 1 can be applied not only to the start of IV&V activities but also to a development review at the beginning of each phase.

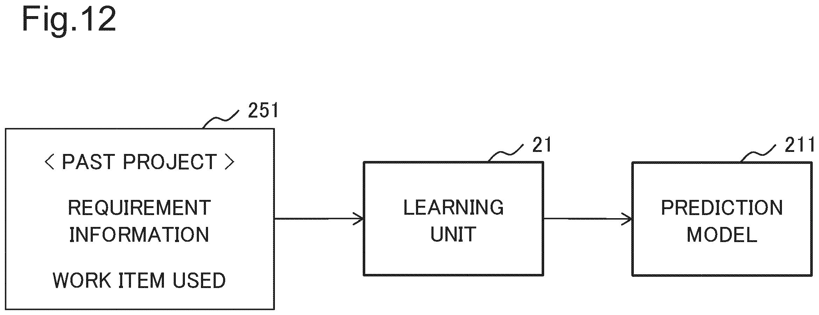

Fig. 12 is a conceptual diagram illustrating an example in which the learning unit 21 generates a prediction model 211 by machine learning using the training data 251 with the requirement information of the past project as an explanatory variable and the work item actually used in the past project as an objective variable.

For example, the requirement information of the past project includes order data, contract data, estimate data, participation data, resource data, and the like. The order data includes information about the purpose and the orderer of the past project. The contract data includes a contract content such as a content of a defect guarantee of a past project. The estimate data includes estimate contents such as a scale and a development period of a past project. The participation data includes information such as participants, participating departments, and external participating companies of the past project. The resource data includes information such as equipment and a license of software used in past projects. Since there is a possibility that the resource data is not determined at the start of the IV&V activity, the resource data may not be included in the requirement information at the stage of the basic design process.

For example, work items in the IV&V plan analysis work are classified into a process group, a process, an activity, a task, and a subtask. For example, the process group includes a planning process group, a result analysis process group, an accumulation improvement process group, and the like. Each process group includes at least one process. For example, the planning process group includes processes such as an implementation review process, an evaluation preparation process, a risk extraction process, a common work process, an evaluation report process, and a process of improving IV&V activities and accumulating knowledge. Each process includes at least one activity. For example, the implementation review process includes activities such as collection of project information, an estimate of the implementation scale, formulation of an implementation policy, and agreement with a stockholder. Each activity includes at least one task. For example, the activity of estimating the implementation scale includes tasks such as determining whether the IV&V activity can be implemented, analyzing the IV&V target, and estimating the IV&V implementation scale. Each task includes at least one subtask. For example, the task of determining whether to perform IV&V activities includes sub-tasks such as analyzing mission information, analyzing a development document system, analyzing past failure information, analyzing pointing out the past IV&V, and determining whether to perform IV&V activities.

For example, work items in the IV&V evaluation work are classified into a process, a viewpoint, a sub viewpoint, and an evaluation viewpoint. For example, the process includes requirement analysis, design, production, testing, system testing, and the like. Each process includes at least one viewpoint. For example, the requirement analysis includes viewpoints of consistency, validity, accuracy, integrity, safety, and the like. Each of the viewpoints includes at least one sub viewpoint. For example, the viewpoint of consistency includes sub viewpoints such as upper and lower (upper process and lower process) traceability, upper and lower equivalence, traceability of the product and the interface specification, and equivalence of the product and the interface specification. Each sub viewpoint includes at least one detailed viewpoint. For example, the upper and lower traceability sub viewpoints include a detailed viewpoint such as traceability with a system specification.

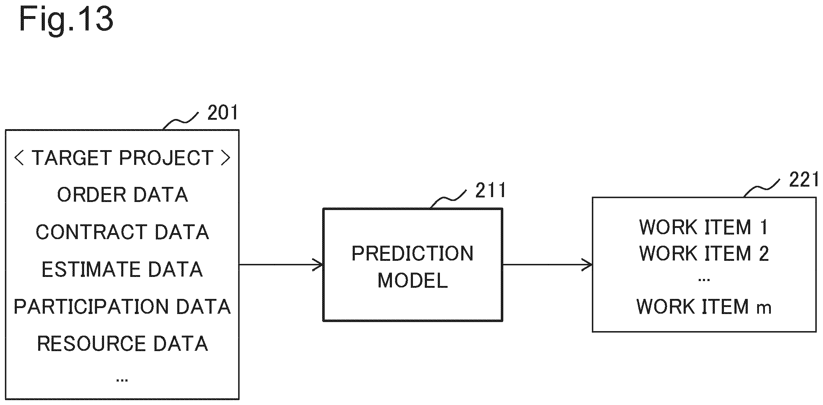

Fig. 13 is a conceptual diagram illustrating an example in which the assistance information generation device 20 generates assistance information (work item list 221) including at least one work item using the prediction model 211 generated by the learning unit 21. In the example of Fig. 13, the requirement information of the target project includes order data, contract data, estimate data, participation data, resource data, and the like.

In the example of Fig. 13, the assistance information generation device 20 inputs the requirement information of the target project to the prediction model 211 to generate the work item list 221 including at least one work item (work items 1 to m) (m is an integer). The assistance information generation device 20 outputs the work item list 221 to an output device such as a display device or a printing device (not illustrated).

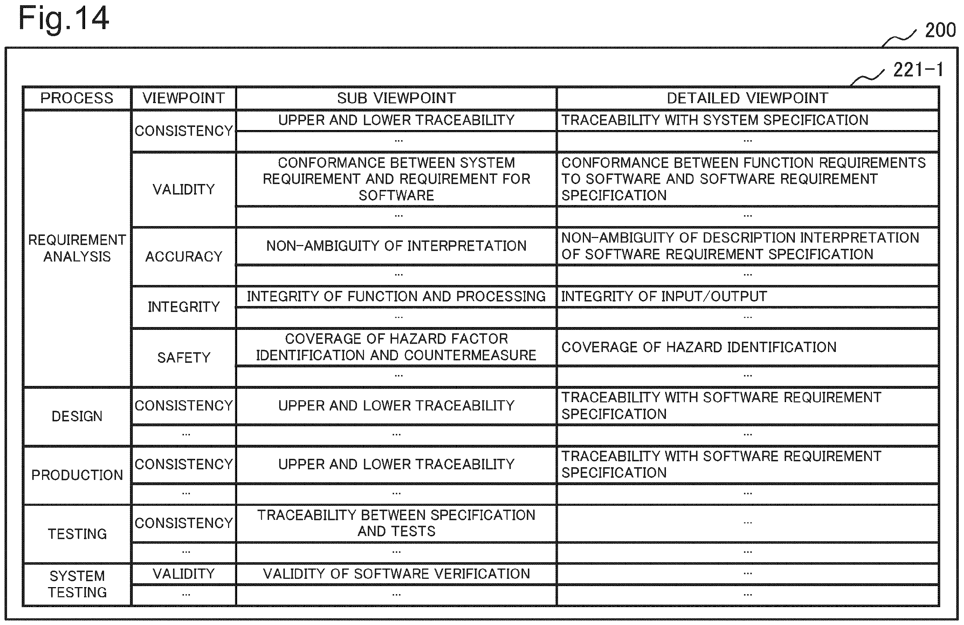

Fig. 14 is an example in which the work item list 221-1 generated by the assistance information generation device 20 is displayed on the screen of a display device 200. The display device 200 is connected to the assistance information generation device 20 and acquires the assistance information generated by the assistance information generation device 20. The work item list 221-1 includes at least one viewpoint in each process such as requirement analysis, design, production, testing, and system testing. Each of the at least one viewpoint includes at least one sub viewpoint. Furthermore, each of the at least one sub viewpoint includes at least one detailed viewpoint.

A worker who refers to the work item list 221 displayed on the screen of the display device 200 can perform work whose level is equivalent to that of an experienced expert by working based on the work item list 221. The work item list 221 may be output by an output device other than the display device 200. For example, the work item list 221 may be printed on a paper medium by a printing device.

### [Application Example 2]

Next, an example (Application Example 2) in which the assistance information generation device 20 generates, as the assistance information, a check list summarizing check items that are preferably considered in the target project based on the requirement information in the past project will be described. In Application Example 2, at the start of an IV&V activity, a check list is generated as assistance information for assisting selection of IV&V check items. Application Example 2 can be applied not only to the start of IV&V activities but also to a development review at the beginning of each phase.

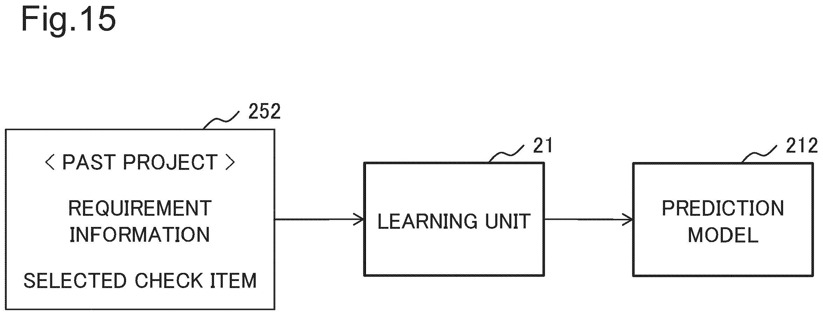

Fig. 15 is a conceptual diagram illustrating an example in which the learning unit 21 generates a prediction model 212 by machine learning using training data 252 with the requirement information of the past project as an explanatory variable and the check item selected in the past project as an objective variable. For example, the project information of the past project includes requirement information such as order data, contract data, estimate data, participation data, and resource data.

For example, the assistance information generation device 20 generates check lists such as a quality accounting form check list, a review record check list, a phase review material check list, a test procedure manual check list, and a design document check list. Each check list includes at least one item including at least one analysis viewpoint.

For example, the quality accounting form check list includes items such as validity of a target value, validity of an actual value, and extraction of a quality risk. For example, the item of validity of the target value includes an analysis viewpoint such as whether the man-hour target value is set without omission in each process, whether the bug target value is set without omission in each process, or whether the review man-hour target value is set without omission in each process.

For example, the review record check list includes items such as confirmation of input data, confirmation of a bug convergence status, confirmation of participants, confirmation of a re-review execution status, confirmation of the number of indications, confirmation of the validity of classification, confirmation of a creation process, confirmation of an indication content, and confirmation of a handling content. For example, the item of input data confirmation includes an analysis viewpoint such as whether data necessary for analyzing the review record is filled in.

For example, the phase review material check list includes items such as a process transition determination implementation status, a process completion status, design validity, a scale, quality, and a review implementation status. For example, the test procedure manual check list includes at least one sub viewpoint and at least one detailed viewpoint for each sub viewpoint for viewpoints of consistency, validity, accuracy, completeness, continuity, reliability, and the like. For example, the design document check list includes at least one analysis viewpoint for items such as integrity, consistency, and accuracy related to a use case, validation of a function, and the like.

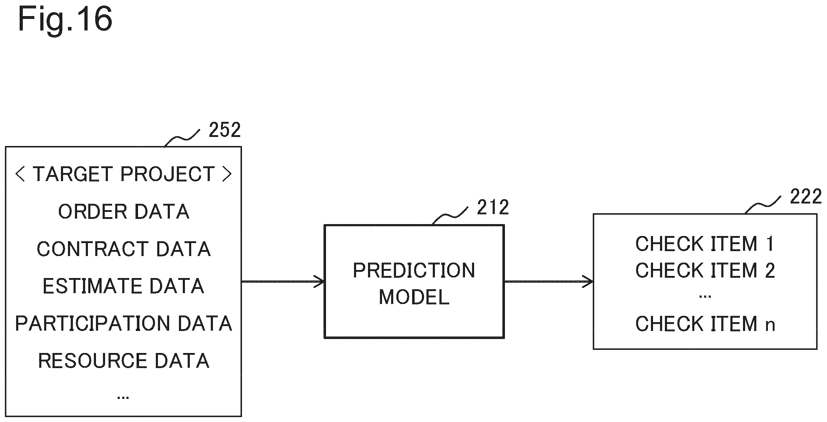

Fig. 16 is a conceptual diagram illustrating an example in which the assistance information generation device 20 generates the assistance information (check list 222) including at least one check item using the prediction model 212 generated by the learning unit 21. In the example of Fig. 16, the requirement information of the target project includes order data, contract data, estimate data, participation data, resource data, and the like.

In the example of Fig. 16, the assistance information generation device 20 inputs the requirement information of the target project to the prediction model 212 to generate the check list 222 including at least one check item (check items 1 to n) (n is an integer). The assistance information generation device 20 outputs the check list 222 to an output device such as a display device or a printing device (not illustrated).

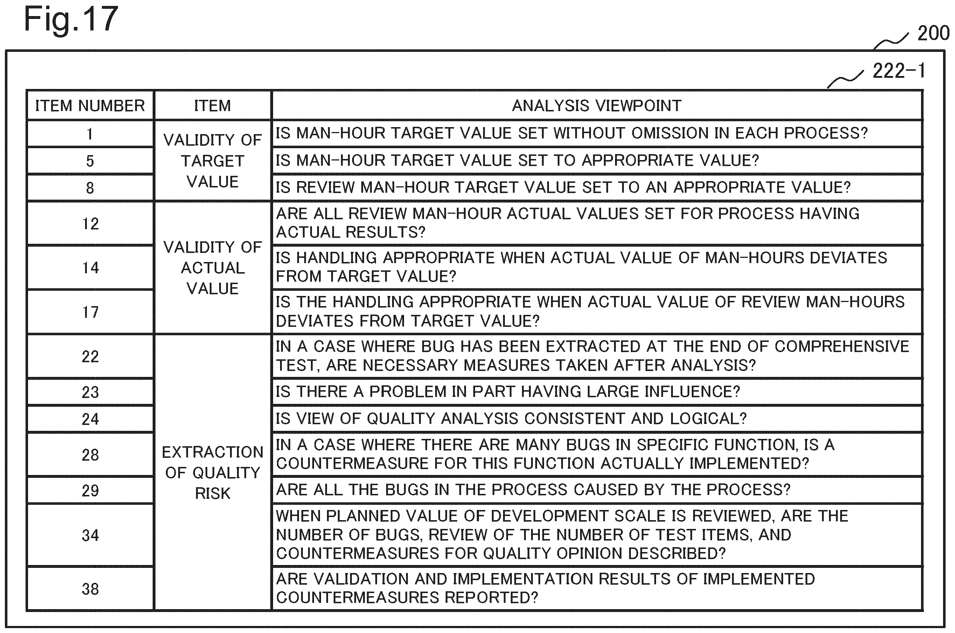

Fig. 17 is an example in which a check list 222-1 generated by the assistance information generation device 20 is displayed on the screen of the display device 200. The check list 222-1 includes, as check items, some of a plurality of analysis viewpoints regarding validity of a target value or an experimental value included in the quality accounting form check list, extraction of a quality risk, and the like.

The worker who has referred to the check list 222 displayed on the screen of the display device 200 can perform work whose level is equivalent to that of an experienced expert by working based on the check list 222. The check list 222 may be output by an output device other than the display device 200. For example, the check list 222 may be printed on a paper medium by a printing device.

### [Application Example 3]

Next, Application Example 3 in which an analysis item lacking in the previous phase is added as assistance information based on project information in the past project and the target project will be described. In Application Example 3, for example, an analysis item having a large contribution degree to an explanatory variable is added as a check item to be added. The examination results of the analysis item to be added are shown in a table (analysis metrics) in which verification targets of the failure such as a design document, a test method procedure (also referred to as a test procedure manual), and a program (source codes) are associated with analysis items for these verification targets.

The failure analysis metrics are a list of the likelihood of a failure that can occur in the design document, the test method procedure, the program, and the like, for each item. For the failure analysis metrics, a value related to the possibility of occurrence of a failure is set. For example, in the design phase, there may be a failure that has been missed because there is no clear product. Analysis metrics are effective in such phases. When generating failure analysis metrics, progress data including the progress of the target project, actual man-hours, a review record, a test record, and the like is added to the project information. Application Example 3 is applied to the progress stage of the target project. In the third Application Example, at the start of analysis in each phase, failure analysis metrics for developing an accurate analysis policy are generated as assistance information in consideration of the occurrence of a failure and the current state of a response.

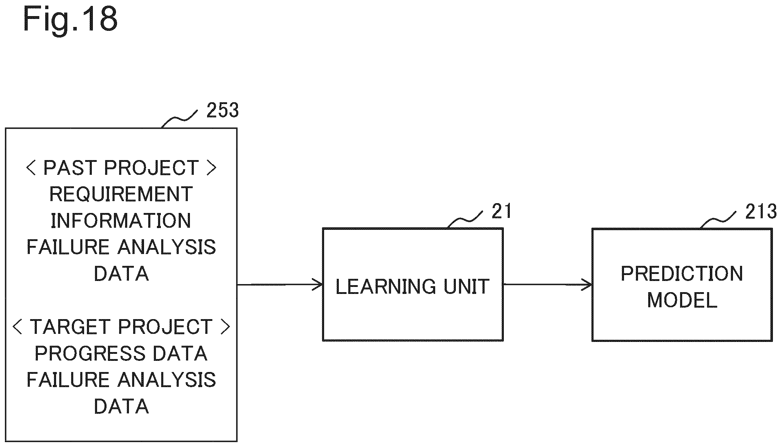

Fig. 18 is a conceptual diagram illustrating an example in which the learning unit 21 generates a prediction model 213 by machine learning. The learning unit 21 executes machine learning using training data 253 with the requirement information of the past project and the progress data of the target project as explanatory variables and the failure analysis data selected in the project as objective variables. For example, the requirement information of the past project includes order data, contract data, estimate data, participation data, resource data, and the like. For example, the requirement information of the target project includes progress data including the progress, actual man-hours, a review record, a test record, and the like of the target project. The failure analysis data is a value related to a possibility that a failure may occur in a basic design document, a test method procedure, a program, and the like. The failure analysis data is used for each item in which a failure may occur.

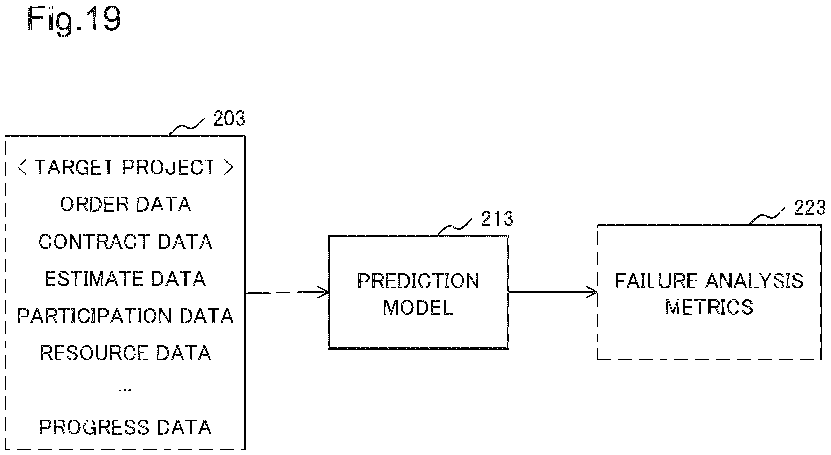

Fig. 19 is a conceptual diagram illustrating an example in which the assistance information generation device 20 generates assistance information (failure analysis metrics 223) including at least one failure analysis data using the prediction model 213 generated by the learning unit 21. In the example of Fig. 19, the requirement information of the target project includes order data, contract data, estimate data, participation data, resource data, progress data, and the like.

In the example of Fig. 19, the assistance information generation device 20 inputs requirement information 203 of the target project to the prediction model 213 to generate failure analysis metrics 223. The assistance information generation device 20 outputs the failure analysis metrics 223 to an output device such as a display device or a printing device (not illustrated).

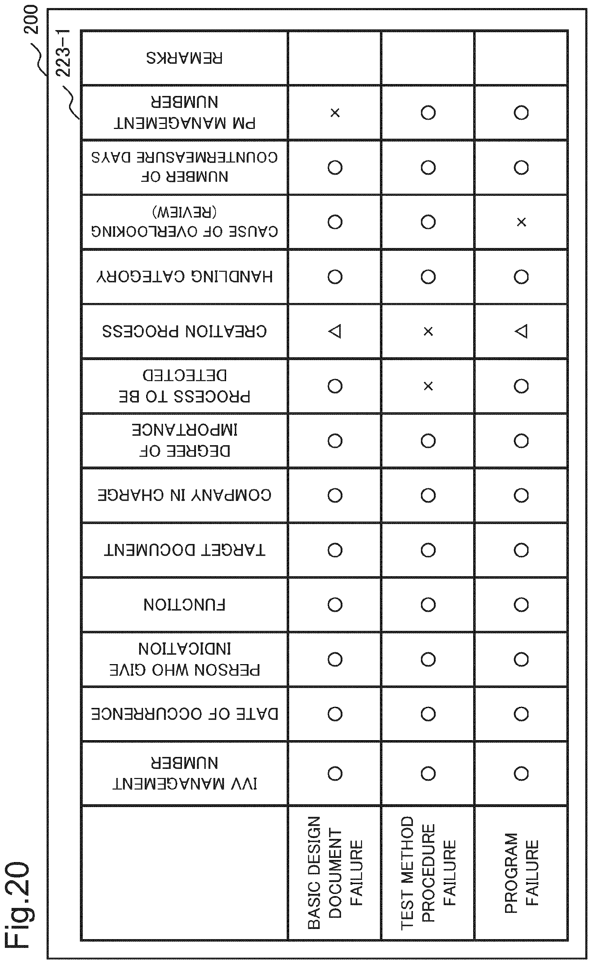

Fig. 20 is an example of displaying the failure analysis metrics 223-1 generated by the assistance information generation device 20 on the screen of the display device 200. The failure analysis metrics 223-1 include items such as an IVV management number, an occurrence date, a person who give an indication, a function, a target document, a company in charge, a degree of importance, a process to be detected, a creation process, a handling classification, a cause of oversight (review), the number of days of measures, and a PM management number. In the failure analysis metrics 223-1, the likelihood of a failure that may occur in a basic design document, a test method procedure, or a program is summarized for each item. In the failure analysis metrics 223-1, the likelihood of a failure is indicated by three types of symbols such as ∘, △, and ×. ∘ indicates that the possibility of occurrence of a failure is low. △ indicates that caution is required for the failure. × indicates that the possibility of occurrence of a failure is extremely high. The likelihood of failure may be expressed by numerical values instead of symbols. For example, the numerical values may be changed in ascending or descending order according to the likelihood of occurrence of the failure.

A worker who has referred to the failure analysis metrics 223 displayed on the screen of the display device 200 can perform work whose level is equivalent to that of an experienced expert by working based on the failure analysis metrics 223. The failure analysis metrics 223 may be output by an output device other than the display device 200. For example, the failure analysis metrics 223 may be printed on paper media by a printing device.

### [Application Example 4]

Next, Application Example 4 in which correction information for a failure that is likely to occur in a target project is generated as assistance information based on requirement information in a past project will be described. Application Example 4 is applied to a stage where the phase of the target project has progressed considerably. In Application Example 4, assistance information for detecting omission of verification and validation is generated in parallel with the analysis work.

In Application Example 4, correction data of a failure that has occurred in a past project is learned. For example, in Application Example 4, the correction data of the failure occurring in the previous phase of the target project is clustered by machine learning. For example, in Application Example 4, requirement data including items (work items, analysis viewpoints, and the like) that have not been selected in the phases of the target project so far is also learned.

In Application Example 4, correction data for the failure that has occurred in past projects is learned, and correction items for the failure are classified into categories. In Application Example 4, correction data for the failure that has occurred with the progress of the target project is learned, and the correction data is classified into categories. For example, in Application Example 4, in the target project, the closest modification item, a modification item within a predetermined range, a modification item classified into the same category, and a representative modification item of the same category (a median value, an average value, or the like) among the modification items of the past project are added to the modification item. For example, the value for each correction item may be statistically indicated by a bar graph, ranking, or the like.

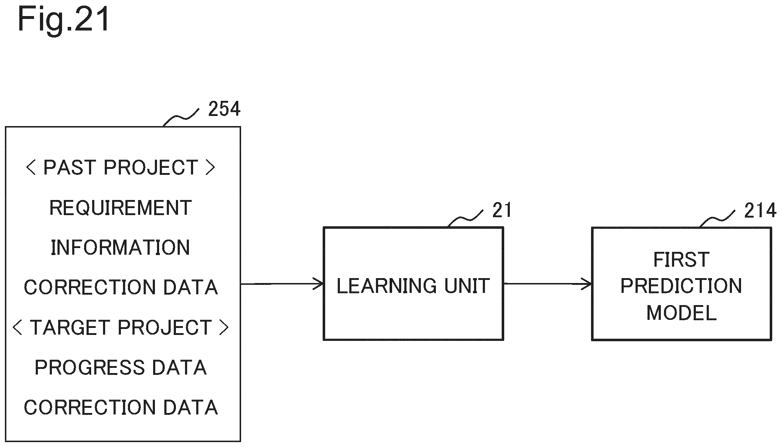

Fig. 21 is a conceptual diagram illustrating an example in which the learning unit 21 generates a first prediction model 214 by machine learning. The learning unit 21 executes machine learning using training data 254 with the requirement information and the correction data of the past project and the progress data and the correction data of the target project as explanatory variables, and the correction data selected in the project as objective variables. For example, the requirement information of the past project includes order data, contract data, estimate data, participation data, resource data, and the like. For example, the requirement information of the target project includes progress data including the progress, actual man-hours, a review record, a test record, and the like of the target project. The correction data includes correction items implemented in the past project and the target project. When sufficient prediction accuracy can be expected only with the requirement information and the correction data of the past project, the progress data and the correction data of the target project do not necessarily need to be learned.

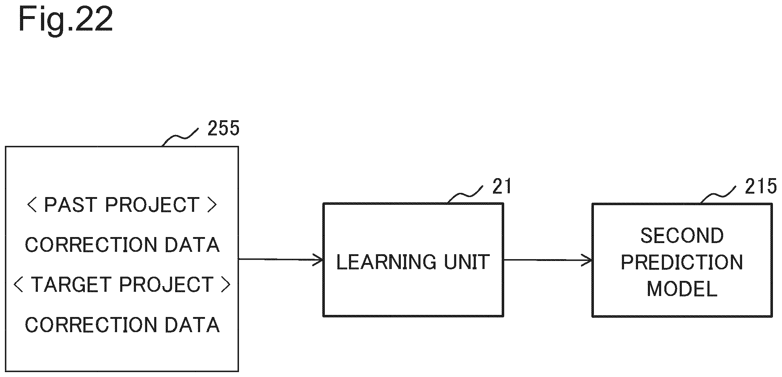

Fig. 22 is a conceptual diagram illustrating an example in which the learning unit 21 generates a second prediction model 215 by learning correction information 255 including correction data for a failure that has occurred in the past project or the target project. For example, the correction information 255 includes correction data such as correction items implemented in a past project or a target project. When sufficient prediction accuracy can be expected only with the requirement information and the correction data of the past project, the correction data such as the correction item implemented in the target project does not necessarily need to be learned.

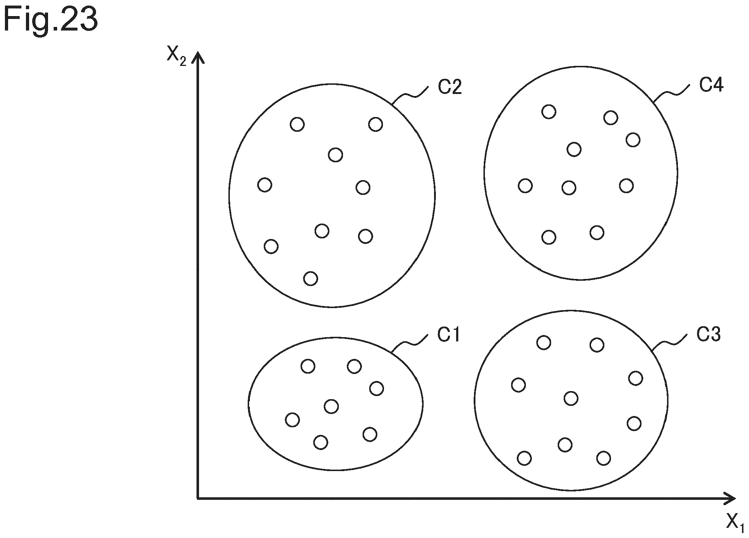

Fig. 23 is a graph illustrating an example in which the correction data implemented in the past project or the target project is classified into categories. In the example of Fig. 23, it is assumed that the correction history can be mapped on a two-dimensional graph having an X₁ axis and an X₂ axis. In the example of Fig. 23, the mapped correction history is classified into four categories of a category C1, a category C2, a category C3, and a category C4. The assistance information generation device 20 may indicate the correction item in the form of statistical data such as a bar graph or ranking.

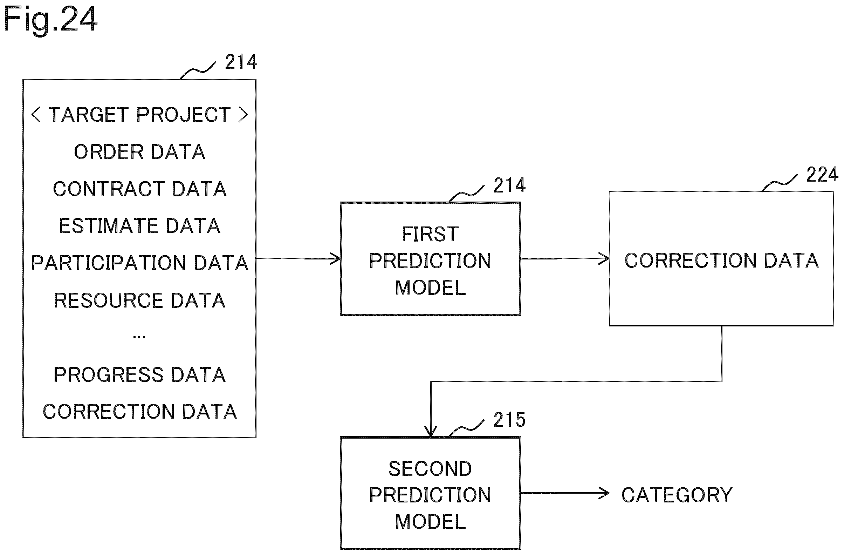

Fig. 24 is a conceptual diagram illustrating an example in which the correction information 224 and information based on a category into which at least one piece of correction data included in the correction information 224 is classified are output as the assistance information. In the example of Fig. 24, the assistance information generation device 20 generates correction information 224 including the correction data for the failure using the first prediction model 214, inputs the generated correction information 224 to the second prediction model 215, and classifies the correction information into categories. In the example of Fig. 24, the requirement information of the target project includes order data, contract data, estimate data, participation data, resource data, progress data, correction data, and the like. The assistance information generation device 20 inputs the requirement information, the progress data, and the correction data of the target project to the first prediction model 214.

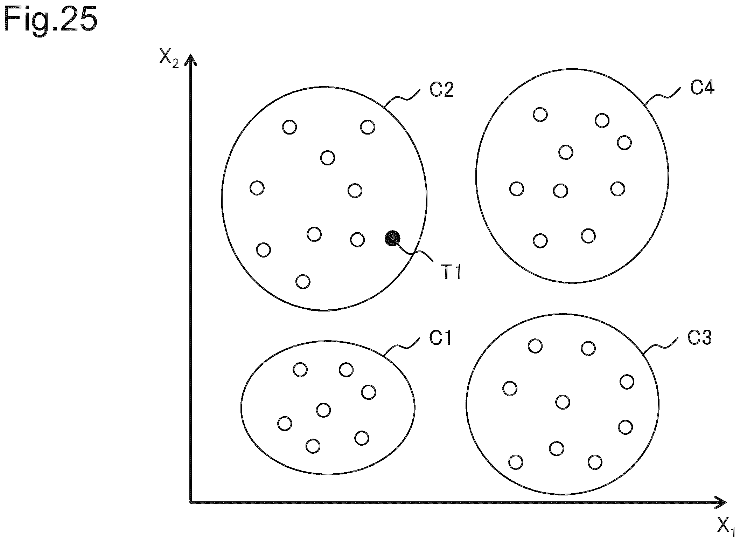

Fig. 25 illustrates an example in which one of the outputs from the first prediction model 214 (referred to as correction data T1) is classified into an area of the category C2 by the second prediction model 215. For example, the second prediction model 215 may output correction data such as a correction history included in a category into which the correction data T1 is classified or a representative correction history of the category. For example, the second prediction model 215 may output correction data such as a correction history closest to the correction data T1 or a correction history within a predetermined range around the correction data T1.

The assistance information generation device 20 outputs the correction information 224 to an output device such as a display device or a printing device (not illustrated). The worker who refers to the correction information 224 output from the output device can perform work whose level is equivalent to that of an experienced expert by working based on the correction information 224.

As described above, the assistance information generation device according to the present example embodiment includes a generation unit that generates the assistance information using at least one piece of assistance data predicted by the prediction unit. For example, the assistance information generation device of the present example embodiment includes an output device that outputs the assistance information.

For example, the learning unit generates at least one prediction model by machine learning using training data with the requirement information of the past project as an explanatory variable and the work item used in the past project as an objective variable. The prediction unit inputs the requirement information of the target project to the prediction model to predict at least one work item. The generation unit generates a work item list including at least one work item predicted by the prediction unit as the assistance information.

For example, the learning unit generates at least one prediction model by machine learning using training data with the requirement information of the past project as an explanatory variable and the check item selected in the past project as an objective variable. The prediction unit inputs the requirement information of the target project to the prediction model and predicts at least one check item. The generation unit generates a check list including at least one check item predicted by the prediction unit as the assistance information.

For example, the learning unit generates the prediction model by machine learning using training data with the requirement information of the past project and the progress information of the target project as explanatory variables and the failure analysis data selected in the past project and the target project as objective variables. The prediction unit inputs the requirement information including the progress data of the target project to the prediction model to predict at least one piece of failure analysis data. The generation unit generates, as the assistance information, failure analysis metrics including at least one failure analysis data predicted by the prediction unit.

For example, the learning unit generates the first prediction model by machine learning using training data with the requirement information and the correction data of the past project as explanatory variables and the correction data selected in the past project as an objective variable. The learning unit generates at least one second prediction model for clustering the correction data of the failure occurred in the past project by machine learning. For example, the prediction unit inputs the requirement information including the progress data and the correction data of the target project to the first prediction model to predict the correction information including at least one piece of correction data. The prediction unit inputs at least one piece of correction data output from the first prediction model to the second prediction model to predict a category into which the correction data is classified. For example, the generation unit generates, as the assistance information, correction information including a case associated with the category predicted by the prediction unit.

The assistance information generation device according to the present example embodiment generates assistance information for efficiently verifying a failure that can occur in each process of system development by learning items based on experience of an expert. Therefore, according to the present example embodiment, even the inexperienced personnel can select the work item to be verified in the target project based on the experience of the expert in the past project.

### (Third example embodiment)

Next, an assistance information generation device according to a third example embodiment will be described with reference to the drawings. The assistance information generation device of the present example embodiment predicts at least one piece of assistance data from project information of a target project using a prediction model generated in advance.

Fig. 25 is a block diagram illustrating an example of a configuration of an assistance information generation device 30 according to the present example embodiment. The assistance information generation device includes a prediction model 31 and a prediction unit 32.

The prediction model 31 is a model generated by machine learning using project information of a past project by a learning device (not illustrated). The prediction model 31 has functions similar to those of the prediction model 110 of the first example embodiment, and the prediction models 211 to 213 and the first prediction model 214 of the second example embodiment. The learning device that generates the prediction model 31 has functions similar to those of the learning unit 11 of the first example embodiment and the learning unit 21 of the second example embodiment.

The prediction unit 32 inputs project information of the target project to the prediction model 31 and predicts at least one piece of assistance data. The prediction unit 32 outputs the assistance information including the at least one piece of assistance data generated. The prediction unit 32 is similar to the prediction unit 12 of the first example embodiment and the prediction unit 22 of the second example embodiment.

According to the assistance information generation device of the present example embodiment, the assistance information including the items to be used in the target project can be predicted by using the prediction model generated by the machine learning using the project information of the past project.

### (Hardware)

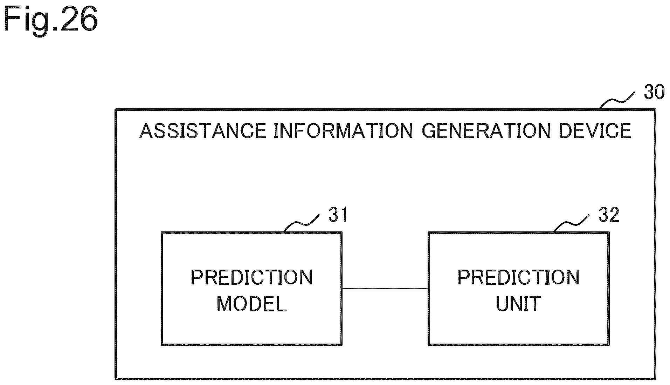

Here, a hardware configuration for executing the processing of the assistance information generation device according to each example embodiment of the present invention will be described using an information processing device 90 of Fig. 26 as an example. The information processing device 90 in Fig. 26 is a configuration example for executing processing of the assistance information generation device of each example embodiment, and does not limit the scope of the present invention.

As illustrated in Fig. 26, the information processing device 90 includes a processor 91, a main storage device 92, an auxiliary storage device 93, an input/output interface 95, a communication interface 96, and a drive device 97. In Fig. 26, the interface is abbreviated as an interface (I/F). The processor 91, the main storage device 92, the auxiliary storage device 93, the input/output interface 95, the communication interface 96, and the drive device 97 are data-communicably connected to each other via a bus 98. The processor 91, the main storage device 92, the auxiliary storage device 93, and the input/output interface 95 are connected to a network such as the Internet or an intranet via the communication interface 96. Fig. 26 illustrates a recording medium 99 capable of recording data.

The processor 91 develops the program stored in the auxiliary storage device 93 or the like in the main storage device 92 and executes the developed program. In the present example embodiment, a software program installed in the information processing device 90 may be used. The processor 91 executes processing by the assistance information generation device according to the present example embodiment.

The main storage device 92 has an area in which a program is developed. The main storage device 92 may be a volatile memory such as a dynamic random access memory (DRAM). A non-volatile memory such as a magnetoresistive random access memory (MRAM) may be configured and added as the main storage device 92.

The auxiliary storage device 93 stores various pieces of data. The auxiliary storage device 93 includes a local disk such as a hard disk or a flash memory. Various pieces of data may be stored in the main storage device 92, and the auxiliary storage device 93 may be omitted.

The input/output interface 95 is an interface that connects the information processing device 90 and a peripheral device. The communication interface 96 is an interface that connects to an external system or device through a network such as the Internet or an intranet based on a standard or a specification. The input/output interface 95 and the communication interface 96 may be shared as an interface connected to an external device.

An input device such as a keyboard, a mouse, or a touch panel may be connected to the information processing device 90 as necessary. These input devices are used to input of information and settings. When the touch panel is used as the input device, the display screen of the display device may also serve as the interface of the input device. Data communication between the processor 91 and the input device may be mediated by the input/output interface 95.

The information processing device 90 may be provided with a display device that displays information. In a case where a display device is provided, the information processing device 90 preferably includes a display control device (not illustrated) that controls display of the display device. The display device may be connected to the information processing device 90 via the input/output interface 95.

The drive device 97 is connected to the bus 98. The drive device 97 mediates reading of data and a program from the recording medium 99, writing of a processing result of the information processing device 90 to the recording medium 99, and the like between the processor 91 and the recording medium 99 (program recording medium). When the recording medium 99 is not used, the drive device 97 may be omitted.

The recording medium 99 can be achieved by, for example, an optical recording medium such as a compact disc (CD) or a digital versatile disc (DVD). The recording medium 99 may be achieved by a semiconductor recording medium such as a Universal Serial Bus (USB) memory or a secure digital (SD) card, a magnetic recording medium such as a flexible disk, or another recording medium. In a case where the program executed by the processor is recorded in the recording medium 99, the recording medium 99 is a program recording medium.

The above is an example of a hardware configuration for enabling the assistance information generation device according to each example embodiment of the present invention. The hardware configuration of Fig. 26 is an example of a hardware configuration for executing arithmetic processing of the assistance information generation device according to each example embodiment, and does not limit the scope of the present invention. A program for causing a computer to execute processing related to the assistance information generation device according to each example embodiment is also included in the scope of the present invention. A program recording medium in which the program according to each example embodiment is recorded is also included in the scope of the present invention.

The components of the assistance information generation device of each example embodiment can be arbitrarily combined. The components of the assistance information generation device of each example embodiment may be implemented by software or may be implemented by a circuit.

While the present invention has been particularly shown and described with reference to exemplary embodiments thereof, the present invention is not limited to these embodiments. It will be understood by those of ordinary skill in the art that various changes in form and details may be made therein without departing from the spirit and scope of the present invention as defined by the claims.

### [Reference signs List]

10, 20, 30 assistance information generation device
11, 21 learning unit
12, 22 prediction unit
23 generation unit
31 prediction model
32 prediction unit
110, 211, 212, 213, 214 prediction model
200 display device

## Claims

1. An assistance information generation device comprising:
a learning means for generating at least one prediction model by machine learning using project information of a past project; and
a prediction means for predicting at least one piece of assistance data by inputting project information of a target project to the prediction model.

2. The assistance information generation device according to claim 1, further comprising: a generation means for generating assistance information using at least one piece of the assistance data predicted by the prediction means.

3. The assistance information generation device according to claim 2, wherein
project information of the past project includes requirement information of the past project and project information of the target project includes requirement information of the target project, and
the requirement information of the past project includes at least any one of order data, contract data, estimate data, participation data, and resource data of the past project and the requirement information of the target project includes at least any one of order data, contract data, estimate data, participation data, and resource data of the target project.

4. The assistance information generation device according to any one of claims 1 to 3, wherein
the learning means generates at least one of the prediction models by machine learning using training data with project information of the past project as an explanatory variable and an item used in the past project as an objective variable.

5. The assistance information generation device according to claim 3, wherein
the learning means
generates at least one of the prediction models by machine learning using training data with requirement information of the past project as an explanatory variable and work items used in the past project as objective variables,
the prediction means
predicts at least one of the work items by inputting requirement information of the target project to the prediction model, and
the generation means
generates a work item list including at least one of the work items predicted by the prediction means as the assistance information.

6. The assistance information generation device according to claim 3, wherein
the learning means
generates at least one of the prediction models by machine learning using training data with requirement information of the past project as an explanatory variable and check items selected in the past project as objective variables,
the prediction means
predicts at least one of the check items by inputting requirement information of the target project to the prediction model, and
the generation means
generates a check list including the at least one of the check items predicted by the prediction means as the assistance information.

7. The assistance information generation device according to claim 3, wherein
the learning means
generates at least one of the prediction models by machine learning using training data with requirement information of the past project and progress information of the target project as explanatory variables and failure analysis data selected in the past project and the target project as objective variables,
the prediction means
predicts at least one piece of the failure analysis data by inputting the requirement information including progress data of the target project to the prediction model, and
the generation means
generates, as the assistance information, failure analysis metrics including the at least one piece of the failure analysis data predicted by the prediction means.

8. The assistance information generation device according to claim 3, wherein
the learning means
generates at least one first prediction model by machine learning using training data with requirement information and correction data of the past project as explanatory variables and correction data for a failure that occurred in the past project as an objective variable, and
generates, by machine learning, at least one second prediction model that clusters the correction data for a failure that occurred in the past project,
the prediction means
predicts correction information including at least one piece of correction data by inputting the requirement information including progress data and correction data of the target project to the first prediction model, and
predicts a category into which the correction data is classified by inputting the at least one piece of the correction data output from the first prediction model to the second prediction model, and
the generation means
generates, as the assistance information, the correction information including a case associated with the category predicted by the prediction means.

9. An assistance information generation method executed by a computer, the method comprising:
generating at least one prediction model by machine learning using project information of a past project; and
predicting at least one piece of assistance data by inputting project information of a target project to the prediction model.

10. A non-transitory program recording medium recording a program for causing a computer to execute:
a process of generating at least one prediction model by machine learning using project information of a past project; and
a process of predicting at least one piece of assistance data by inputting project information of a target project to the prediction model.
